# FASCICULE DE BREVET EUROPEEN

(11) **EP 0 946 423 B1**
(45) Date de publication et mention de la délivrance du brevet: **17.04.2002**
(21) Numéro de dépôt: 97911280.2
(22) Date de dépôt: 16.10.1997
(51) Int. Cl.: C02F 1/14

(54) **ALAMBICS SOLAIRES DE PRODUCTION D'EAU DOUCE**
SOLAR DISTILLATIONSGERÄT ZUM HERSTELLUNG VON TRINKWASSER
SOLAR STILLS FOR PRODUCING FRESH WATER

(30) Priorité: 16.10.1996 FR 9612614; 13.06.1997 FR 9707315
(43) Date de publication de la demande: 06.10.1999
(73) Titulaire: 3rd MW - The Third Millenium Water Company, 49320 Vauchretien (FR)
(72) Inventeur: Domen, Jean-Paul, 72210 Souligne-Flace (FR)
(74) Mandataire: Pochart, François
(86) Numéro de dépôt international: FR9701855
(87) Numéro de publication internationale: WO9816474

(56) Documents cités:
- GB-A- 2 145 002
- US-A- 2 445 350
- US-A- 4 075 063
- US-A- 4 698 135

## Description

L'invention se rapporte à des alambics solaires de production d'eau douce, c'est-à-dire à des équipements domestiques ou à des unités de centrales industrielles utilisant l'énergie du soleil pour produire de l'eau déminéralisée, à partir d'une eau non potable naturelle. Dans le cas où cette eau non potable est de l'eau de mer, ces alambics pourront également, à titre de sous-produit intéressant, produire de la saumure.

Les problèmes tant économiques que techniques, posés par les différents types d'installations de dessalement de l'eau de mer (distillation et filtration), ont été décrits en détail dans un article de Andy Coghlan, intitulé "Fresh water from the sea", publié pages 37 à 40 de la revue britannique New Scientist du 31 Août 1991. Dans cet article, il est rappelé l'impérieuse nécessité de développer rapidement des techniques à la fois efficaces et peu onéreuses de dessalement de l'eau de mer, pour faire face aux besoins exponentiels en eau douce dans les régions sèches du monde.

Pour faire face à ce problème, de nombreuses solutions pour distiller de l'eau de mer ont été proposées qui font appel à l'énergie gratuite relativement intense du soleil, en lieu et place de l'énergie onéreuse produite par les combustibles fossiles. Ces solutions ont fait l'objet de nombreux brevets et articles parmi lesquels on en retiendra deux, à titre de références particulièrement pertinentes.

Le brevet européen EP 0612691 publié en 1994, déposé par MITSUBISHI, décrit une unité solaire de production d'eau douce de type conventionnel, dans laquelle un réservoir à fond noir, contenant de l'eau de mer, est installé sous un habitacle transparent à toit pentu. Deux gouttières, destinées à recueillir l'eau douce qui ruisselle sur les parois verticales de l'habitacle, sont disposées au pied de ces parois. Afin d'éviter que les gouttes d'eau douce, condensées sur la face interne du toit, retombent dans le réservoir et, de plus, réfléchissent une partie du rayonnement solaire, cette face est munie d'un revêtement mouillable, transparent ou au moins translucide, qui empêche la formation de gouttes d'eau. En outre, pour diminuer la température du toit de l'habitacle et ainsi améliorer la condensation de la vapeur, de l'eau de mer est constamment répandue sur ce toit. De la sorte, le rendement d'une telle installation est amélioré. Mais au moins deux inconvénients demeurent: (1) une trop grande quantité d'eau est constamment chauffée par le soleil, ce qui diminue la température maximale de la masse d'eau du réservoir et réduit l'importance de l'évaporation réalisée et (2) toute la chaleur latente de condensation de la vapeur est perdue.

L'article de New Scientist cité plus haut comporte, à la page 39, une description succincte d'un équipement domestique de production d'eau douce original, à haut rendement, faisant appel à l'énergie solaire. Cet équipement, développé par P.Le Goff, comporte sous une membrane de plastique transparent, un miroir orientable réfléchissant le rayonnement solaire vers la face avant noire d'une première plaque d'aluminium verticalement disposée. La face arrière de cette première plaque est revêtue d'une gaze, alimentée en eau de mer par gravité. Plusieurs plaques identiques munies de ce même revêtement hydrophile sont disposées en cascade à quelques centimètres les unes des autres. Le rayonnement solaire chauffe la première plaque jusqu'à 94°C environ, ce qui a pour effet d'évaporer une partie relativement importante de l'eau circulant dans le revêtement tapissant sa face arrière. La vapeur d'eau ainsi produite dans l'espace séparant la première et la deuxième plaque se condense sur la face avant de cette deuxième plaque. Ce qui a pour effet de provoquer son échauffement, lequel évapore à son tour une partie importante de l'eau salée circulant sur sa face arrière. Et ainsi de suite jusqu'à la sixième plaque, laquelle s'échauffe jusqu'à 45°C. L'eau douce condensée sur la face avant de chaque plaque à partir de la deuxième est recueillie dans un collecteur. Un autre collecteur non représenté recueille la saumure apparaissant au bas de chaque revêtement. Le constructeur annonce une production journalière de 20 litres d'eau douce par mètre carré de plaque exposé au soleil. Un tel rendement élevé est le résultat de la récupération sur les plaques de rang 2 à 6 de la chaleur latente de condensation de la vapeur d'eau produite par les revêtements chauds constamment humidifiés des plaques de rang 1 à 5. Selon l'auteur de l'article, ce résultat se compare très avantageusement à ceux (2 à 3 litres par jour et par m²) des équipements solaires de distillation d'eau de mer conventionnels. Cet appareil est efficace et convient à des équipements domestiques mais il est relativement onéreux à construire du fait de certains composants (héliostat et plaques d'aluminium) qu'il comporte.

Dans le texte qui va suivre, par rendement d'un alambic solaire de production d'eau douce, on entendra le rapport entre, d'une part, la quantité d'eau douce effectivement produite par heure d'ensoleillement moyen et par mètre carré de surface absorbant le rayonnement solaire et, d'autre part, la quantité d'eau Q, théoriquement évaporée par la chaleur du soleil, absorbée par cette unité de surface pendant cette unité de temps ( soit Q = 1,5 kg/h.m² pour un ensoleillement moyen de 1 kW/m², dans les régions sèches).

Le premier objet de l'invention est de construire des alambics solaires perfectionnés de production d'eau douce.

Le deuxième objet de l'invention est de construire de tels alambics possédant un rendement aussi élevé que possible, tout en nécessitant un investissement initial relativement faible et des coûts d'exploitation et de maintenance particulièrement réduits.

Le troisième objet de l'invention est de réaliser des alambics solaires de production d'eau douce dans lesquels une récupération aussi élevée que possible de la chaleur latente de condensation de la vapeur est mise en oeuvre.

Le quatrième objet de l'invention est de réaliser de tels alambics solaires qui soient aisément adaptables aux conditions particulières de leur mise en oeuvre.

Le cinquième objet de l'invention est de réaliser de tels alambics solaires de production d'eau douce présentant une bonne tenue aux vents forts.

Le sixième objet de l'invention concerne des centrales solaires industrielles produisant de l'eau douce par distillation de l'eau de mer et comprenant un nombre relativement élevé d'alambics solaires identiques.

Le septième objet de l'invention concerne des installations industrielles combinant une centrale solaire de production d'eau douce par distillation de l'eau de mer et un marais salant alimenté par la saumure fournie par cette centrale.

L'invention propose un alambic solaire de production d'eau douce comprenant:
- une chambre d'évaporation (12-162) possédant une paroi souple légèrement tendue constituée par une membrane imperméable de couleur sombre (36a-164), exposée au soleil, pourvue d'un revêtement hydrophile (38a-166), disposé à l'ombre ;
- une chambre de condensation (14-30-152) possédant une paroi imperméable (36c-154), en contact avec le milieu extérieur adaptée à dissiper dans ce milieu la chaleur latente de condensation de la vapeur produite ;
- caractérisé en ce que:
   - la chambre d'évaporation (12-162) est de forme allongée et, par ses extrémités (22-26), elle communique avec la chambre de condensation (14-30-152) ;
   - un ventilateur (28) est installé dans l'appareil, pour faire circuler un courant d'air en boucle fermée antre ces deux chambres (12-14/30 ou 162-152) ;
   - un conduit (40-158), alimenté en eau à distiller, est adapté à distribuer cette eau, par capillarité et gravité, sur le revêtement hydrophile (38a-166) ;
   - un conduit (54-176), adapté à évacuer l'eau douce produite, est installé en un point bas (64) de la chambre de condensation (14/30-152) ;
   - un conduit (56-172), adapté à évacuer la saumure produite, est installé en un point bas (56) de la chambre d'évaporation (12-162).

Les modes de réalisation conformément à l'invention sont décrits dans les revendications dépendantes 2 à 14.

L'invention décrit, un alambic solaire de production d'eau douce comprenant:
- un dispositif, adapté à absorber le rayonnement solaire, contenant de l'eau à distiller;
- une surface de condensation sur laquelle la vapeur, produite par l'échauffement de l'eau du dispositif, peut se condenser;
- des moyens pour recueillir l'eau douce ruisselant sur la surface de condensation;
- est caractérisé en ce que:
   - ce dispositif comprend une membrane imperméable souple, tendue, de couleur sombre, exposée au soleil et, disposée à l'ombre en revêtement de cette membrane, une nappe hydrophile alimentée en eau par capillarité et gravité;
   - des moyens pour récupérèr la saumure sont disposés en bas de cette nappe.

On notera dès à présent que le caractère plus ou moins hydrophile d'une matière est mesuré par le degré de capillarité qu'elle présente vis-à-vis des liquides susceptibles de la mouiller. Dans ces conditions, un nappe mouillable mais relativement peu hydrophile sera alimentée par gravité, par déversement sur elle de l'eau à distiller. En revanche, une nappe très hydrophile sera alimentée par simple capillarité, par immersion d'un de ses bords dans l'eau. Par la suite, la capillarité même faible de ces nappes et les forces de gravité assureront l'étalement, la rétention et l'écoulement de cette eau, pendant son parcours de haut en bas de ces nappes. Pour une nappe très hydrophile, le débit, par unité de largeur immergée, de l'eau ainsi pompée, décroit quand augmente la hauteur maximale de la nappe au-dessus du niveau d'eau concerné.

Grâce aux dispositions selon l'invention énoncées ci-dessus, on réalise des alambics solaires de production d'eau douce qui évitent plusieurs des inconvénients des unités solaires conventionnelles de distillation de l'eau de mer. En effet, la masse d'eau chauffée par le soleil est ici réduite à une valeur minimale, puisque limitée au faible volume constamment renouvelé de l'eau retenue à chaque instant dans la nappe hydrophile. Dans ces conditions, la température maximale que peut prendre cette eau est plus élevée que celle atteinte dans les alambics solaires conventionnels, ce qui a pour effet d'augmenter notablement la pression de vapeur saturante au voisinage immédiat de la nappe hydrophile et donc l'intensité de l'évaporation réalisée.

De plus, comme la durée de séjour de l'eau de mer dans l'installation est faible (quelques minutes au plus), le développement d'algues ou de mousses sur cette nappe est a priori exclus, même après plusieurs mois de fonctionnement continu. Cela, d'autant plus que la nappe humide reçoit très peu de rayonnement solaire, étant à l'ombre de la membrane sombre.

Selon une première forme de réalisation particulière de cet alambic,
- la membrane est la paroi extérieure d'une chambre d'évaporation relativement longue, installée sous un abri transparent;
- l'abri transparent est un habitacle relativement étanche dont la face interne de la paroi constitue la surface de condensation;
- un ventilateur est associé à l'appareil pour faire circuler, en circuit fermé, un courant d'air entre la chambre d'évaporation et une chambre de condensation, constituée par le volume de l'habitacle extérieur à la chambre d'évaporation.

Selon une deuxième forme de réalisation particulière de cet alambic,
- la membrane sombre est la paroi extérieure d'une chambre d'évaporation relavement longue, installée sous une couverture d'isolation thermique transparente;
- la surface de condensation est la face interne de la paroi imperméable d'une chambre de condensation, disposée sous la chambre d'évaporation et séparée d'elle par une cloison mitoyenne longitudinale, les deux chambres communiquant entre elles par des ouvertures aménagées au-dessus de cloisons transversales séparant les parties basses de leurs extrémités attenantes;
- la paroi extérieure de la chambre de condensation comporte un revêtement hydrophile, maintenu humide par tout moyen approprié et au moins partiellement exposé à l'air extérieur;
- la cloison mitoyenne comporte un revêtement hydrophile du côté de la chambre d'évaporation;
- un ventilateur est associé à l'appareil pour faire circuler un courant d'air en circuit fermé d'une chambre à l'autre;
- des moyens appropriés sont associés au ventilateur pour permettre de gonfler les deux chambres et pour y maintenir une légère surpression.

Selon une troisième forme de réalisation particulière de cet alambic,
- la membrane sombre est la paroi extérieure d'une chambre d'évaporation relativement longue, installée sous une couverture d'isolation thermique transparente;
- la surface de condensation est la face interne de la paroi imperméable d'une chambre de condensation disposée, sans paroi commune, à côté de la chambre d'évaporation, les deux chambres communiquant entre elles par des ouvertures aménagées au-dessus de cloisons transversales séparant les parties basses de leurs extrémités attenantes;
- la paroi extérieure de la chambre de condensation comporte un revêtement hydrophile, grotégé du soleil, maintenu humide par tout moyen approprié, et au moins partiellement exposé à l'air extérieur;
- un ventilateur est associé à l'appareil pour faire circuler un courant d'air en circuit fermé d'une chambre à l'autre;
- des moyens appropriés sont associés au ventilateur pour permettre de gonfler les deux chambres et pour y maintenir une légère surpression.

Dans les trois formes particulières de réalisation de l'invention, présentées ci-dessus, la circulation d'air en circuit fermé dans les chambres d'évaporation et de condensation, améliore considérablement les conditions de transport de la vapeur d'eau, produite dans la chambre d'évaporation, vers la surface de condensation. Dans la première forme de réalisation particulière décrite, les gouttes d'eau condensée qui tombent du toit de l'habitacle ne sont plus perdues puisqu'elles rencontrent la membrane imperméable avant d'aboutir aux moyens de collecte d'eau douce prévus à cet effet. De plus, dans les deux autres formes de réalisation de l'invention, décrites plus haut, on soulignera l'intérêt de la présence d'une couverture transparente d'isolation thermique installée au-dessus de la partie de paroi de la chambre d'évaporation exposée au soleil. Cette couverture supprime l'apparition de toute goutte d'eau condensée faisant écran au rayonnement solaire, ce qui permet à cette partie de paroi de recevoir à chaque instant une quantité de chaleur plus importante et d'augmenter en conséquence l'intensité d'évaporation de l'eau contenue dans la nappe hydrophile. A cette quantité de chaleur plus élevée, s'ajoute une température plus basse de la surface de condensation, laquelle dépend ici de la température du revêtement humide exposé à l'air de cette surface et donc de la température du point de rosée et du degré d'hygrométrie de l'air extérieur. A titre d'exemples, cette couverture transparente sera une feuille de plastique mince, aux bords soudés à la membrane sombre, enfermant ainsi une couche d'air sec de quelques centimètres d'épaisseur ou encore, une feuille de plastique relativement épaisse, à faible conductivité thermique.

On notera encore qu'une partie de la condensation de vapeur, réalisée dans la chambre de condensation de la deuxième forme de réalisation de l'invention, se produit avec récupération de chaleur latente sur la cloison mitoyenne séparant cette chambre de la chambre d'évaporation. Ce qui permet à cette deuxième forme de réalisation de l'invention de bénéficier d'un rendement un peu supérieur à l'unité. Pour finir, on appréciera que les deuxième et troisième formes de réalisation de l'invention peuvent être aisément installées en tout lieu (sol, terrasse ou plan d'eau) et que leur tenue aux vents forts est excellente du fait de la tension relativement importante de la paroi extérieure des chambres d'évaporation et de condensation, maintenues en légère surpression.

Un autre avantage du dispositif particulier de rétention d'eau à distiller, que comporte l'alambic solaire selon l'invention, concerne la saumure. En effet, on peut noter que, dès lors que le débit d'eau de mer, réparti par la nappe hydrophile sur la membrane imperméable chauffée par le soleil, est suffisamment élevé, aucun dépôt de sel ne peut s'y former. Ce débit varie avec l'intensité maximale du rayonnement solaire du lieu. Il est déterminé par le rapport des débits d'eau de mer et de saumure qui doit toujours être notablement inférieur à huit, quatre par exemple. Ces chiffres résultent de deux grandeurs, la concentration en sel de l'eau de mer qui est en général d'environ 30 g/l et le seuil de concentration en sel d'une saumure, dans laquelle peuvent apparaître des cristaux de sel, qui est d'environ 240 g/l. En respectant cette condition, tout le sel contenu dans l'eau de mer circulant dans la nappe hydrophile est évacué dans la saumure récupérée et aucun dépôt de sel ne peut se former dans cette nappe.

Selon une formulation générale de la forme optimale de réalisation de la présente invention, un alambic solaire de production d'eau douce est caractérisé en ce que:
- il comprend une chambre d'évaporation et deux chambres de condensation, respectivement première et seconde;
- la chambre d'évaporation possède une paroi souple, formée par une membrane extérieure imperméable de couleur sombre, pourvue d'un revêtement intérieur hydrophile, cette chambre étant relativement longue, exposée au soleil et installée sous une couverture d'isolation thermique transparente;
- un conduit, alimenté en eau à distiller, est adapté à humidifier, par capillarité et gravité, les nappes hydrophiles tapissant la chambre d'évaporation;
- la première chambre de condensation possède des parois souples formées par des membranes imperméables, et au moins l'une de ces membranes, pourvue d'un revêtement hydrophile extérieur, alimenté en eau par capillarité et gravité, constitue une cloison mitoyenne séparant la première chambre de condensation de la chambre d'évaporation;
- l'extrémité aval de la chambre d'évaporation, communique avec l'entrée de la première chambre de condensation, par une ouverture adaptée à empêcher tout passage d'eau à distiller;
- l'extrémité aval de la première chambre de condensation débouche dans une seconde chambre de condensation, la paroi extérieure de cette seconde chambre étant pourvue d'un revêtement hydrophile exposé à l'air, protégé du soleil et maintenu humide par un apport d'eau permanent;
- la seconde chambre communique avec la chambre d'évaporation par une ouverture, adaptée à empêcher tout passage d'eau à distiller;
- un ventilateur électrique est associé à l'appareil, pour faire circuler en circuit fermé un courant d'air dans la chambre d'évaporation puis dans les première et seconde chambres de condensation;
- des moyens appropriés sont associés au ventilateur pour permettre de gonfler ces trois chambres et pour y maintenir une légère surpression;
- un tuyau pour évacuer la saumure aboutit en un point bas de la chambre d'évaporation;
- un tuyau pour évacuer l'eau douce distillée aboutit en un point bas de la seconde chambre de condensation.

Selon une caractéristique complémentaire, la première chambre de condensation et la chambre d'évaporation possèdent des formes géométriques dépendant l'une de l'autre, adaptées à minimiser les échanges thermiques de cette première chambre avec l'extérieur et à maximiser les échanges thermiques entre ces deux chambres.

Selon une autre caractéristique complémentaire, la première et la seconde chambres de condensation communiquent entre elles par des liaisons adaptées à maximiser les échanges thermiques des flux d'air sortant de la première chambre de condensation avec la face interne de la paroi extérieure de la seconde chambre de condensation.

Selon une première forme optimale particulière de réalisation de l'alambic solaire de production d'eau douce selon l'invention, l'alambic présente la forme d'un long cylindre à section circulaire, à l'intérieur duquel sont installées les trois chambres, la cloison mitoyenne séparant la chambre d'évaporation de la première chambre de condensation forme deux plans disposés en V.

Selon une deuxième forme optimale particulière de réalisation de l'invention,
- l'alambic solaire de production d'eau douce est une sorte de grand matelas pneumatique, constitué par une pluralité de cellules de distillation;
- chaque cellule de distillation comporte, disposées en série, une chambre d'évaporation et deux chambres de condensation, respectivement première et seconde;
- la seconde chambre de condensation d'une cellule est l'antichambre de la chambre d'évaporation de la cellule suivante, lorsque les cellules sont disposées en série;
- un ventilateur unique est installé à l'extérieur du matelas formé par les cellules de distillation, pour faire circuler de l'air en circuit fermé dans toutes les chambres des cellules de distillation de l'appareil;
- des cloisons mitoyennes obliques symétriques, fixées aux deux faces de l'appareil, séparent les chambres d'évaporation des premières chambres de condensation et donnent à ces chambres des sections en forme de secteurs circulaires étroits;
- une unique couverture transparente d'isolation thermique recouvre la partie de la face de l'appareil exposée au soleil, formée par les zônes chaudes contigües des chambres d'évaporation.

Grâce à ces dispositions nouvelles, les alambics solaires de production d'eau douce, perfectionnés en accord avec les formes de réalisation optimales de l'invention, sont susceptibles de distiller de l'eau de mer et la plupart des eaux non potables naturelles, avec un rendement particulièrement élevé.

cela est tout d'abord dû aux caractéristiques particulières de l'invention déjà présentées qui ne seront pas commentées à nouveau. En revanche on notera ce qui suit.

Dans la chambre d'évaporation, la température du revêtement hydrophile humide de la zône chaude exposée au soleil est relativement élevée et bien évidemment supérieure à celle des revêtements des cloisons mitoyennes placées à l'ombre. La température de l'air chaud et humide qui sort de la chambre d'évaporation puis pénètre dans la première chambre de condensation est comprise entre ces deux températures.

Grâce aux formes particulières des sections droites des cloisons mitoyennes qui séparent les chambres d'évaporation et les premières chambres de condensation des différentes cellules de distillation décrites plus haut, la surface relative de ces cloisons par rapport à la surface des parois sombres exposées au soleil est relativement importante. Et, dans le cas d'un alambic solaire comprenant plusieurs cellules de distillation, la surface totale des cloisons mitoyennes formant les parois les moins chaudes de la chambre d'évaporation-peut même égaler plusieurs fois celle de la zône relativement chaude exposée au soleil. Dans ces conditions, les échanges thermiques entre les deux chambres concernées sont importants et la condensation de la vapeur est grandement favorisée, comme cela est expliqué en détail ci-après.

Dans le cas d'un alambic comportant une première chambre de condensation thermiquement isolée par rapport à l'extérieur, les cloisons mitoyennes qui séparent cette chambre de la chambre d'évaporation forment un ensemble de zônes relativement froides rencontrées par le flux d'air chaud et humide qui sort de la chambre d'évaporation. Une condensation importante de la vapeur d'eau emportée par ce flux d'air se produit immédiatement par diffusion sur ces cloisons mitoyennes à la surface totale relativement grande. L'importance de cette condensation diminue au fur et à mesure que le courant d'air de moins en moins chaud et humide avance dans la première chambre de condensation. Tout au long de la traversée de cette première chambre, une proportion importante de la chaleur latente de condensation de la vapeur est immédiatement récupérée par la face imperméable de ces cloisons mitoyennes et continuellement recyclée pour participer à l'évaporation de l'eau distribuée par la nappe hydrophile qui tapisse la face externe de ces tubes. On notera qu'un résultat identique ou même supérieur est obtenu lorsque la première chambre de condensation est complètement entourée par la chambre d'évaporation.

La paroi de la seconde chambre de condensation est relativement froide, puisque la température de cette paroi tend constamment vers celle du point de rosée de l'air ambiant (particulièrement basse dans les zônes désertiques) du fait de la présence autour de cette seconde chambre d'un revêtement extérieur humide, exposé à l'air et abrité du soleil. En outre, les liaisons entre-la première et la seconde chambre de condensation sont aménagées pour que les flux d'air qui sortent de la première chambre de condensation lèchent au mieux la face interne de la paroi extérieure de cette seconde chambre. Pour chaque modèle d'alambic, la longueur relative de cette seconde chambre de condensation est déterminée à la suite d'essais systématiques, de façon à optimiser la température du courant d'air qui en sort.

La traversée de cette seconde chambre de condensation constitue une dernière étape de production d'eau douce au cours d'un cycle de circulation de l'air dans une cellule de distillation selon l'invention. Dans ces conditions, l'air qui pénètre dans la chambre d'évaporation d'une cellule de distillation est relativement sec parce que relativement froid. Ce qui, comme on le verra plus loin, est particulièrement favorable à la réalisation efficace de la double fonction qui est assignée à cet air dans la chambre d'évaporation, à savoir (1) s'échauffer progressivement et ainsi se charger d'un maximum de vapeur d'eau au cours de sa traversée et (2) permettre un recyclage efficace de la chaleur latente de la vapeur qui ensuite se condensera dans la première chambre de condensation.

A cet égard, on notera que la présence de cette seconde chambre de condensation est une condition nécessaire à la possibilité d'un recyclage plus ou moins complet de la chaleur latente de la vapeur, effectué à travers les cloisons mitoyennes qui séparent la première chambre de condensation de la chambre d'évaporation. Dans la seconde chambre de condensation, le refroidissement important du flux d'air, réalisé avant son retour dans la chambre d'évaporation, est le phénomène qui constitue la condition nécessaire au transfert de chaleur latente à travers les cloisons mitoyennes. En effet, grâce à ce refroidissement final du flux d'air, avant son retour dans la chambre d'évaporation, deux différences positives de température, nécessaires à ce transfert, sont en permanence établies à un niveau élevé, de part et d'autre et tout au long des cloisons mitoyennes. La première de ces différences positives est établie entre T₁, la température décroissante de l'air, initialement chaud et humide à la sortie de la chambre d'évaporation, au cours de sa traversée des tubes de la première chambre de condensation et T_{c}, la température également décroissante des parois imperméables des cloisons mitoyennes, depuis l'entrée jusqu'à la sortie de cette première chambre de condensation. Tout au long des cloisons mitoyennes, de l'entrée à la sortie de la première chambre de condensation, la relation T₁ > T_{c} est vérifiée. La seconde de ces différences positives est celle établie entre T_{c}, la température croissante des revêtements hydrophiles humides tout au long des parois des cloisons mitoyennes, depuis l'entrée jusqu'à la sortie de la chambre d'évaporation, et T₂, la température également croissante des couches d'air en déplacement lèchant ces revêtements humides au cours de leur traversée de la chambre d'évaporation. Tout au long des cloisons mitoyennes, depuis l'entrée jusqu'à la sortie de la chambre d'évaporation, la relation T_{C} > T₂ est vérifiée. En conséquence, ce phénomène est celui-là même qui établit les conditions nécessaires à un recyclage de grande amplitude de la chaleur latente de la vapeur emportée, au cours d'une période de circulation de l'air dans une cellule de distillation. Ce phénomène a pour effet de notablement augmenter le rendement de l'alambic solaire de production d'eau douce selon l'invention, jusqu'à une valeur bien supérieure à l'unité. On notera que ce rendement augmente avec la valeur du rapport entre les surfaces totales des cloisons mitoyennes sur lesquelles la chaleur latente de condensation de la vapeur est recyclée et la surface de la zône chaude de la chambre d'évaporation.

De ce qui précède, il résulte que les différentes étapes du cycle de circulation de l'air dans les trois chambres successives d'une cellule de distillation d'un alambic solaire de production d'eau douce selon l'invention, sont optimisées. Ce qui contribue à considérablement améliorer le rendement d'un tel alambic.

En outre, un tel alambic solaire perfectionné présente une grande facilité d'adaption aux conditions extérieures d'installation et de mise en oeuvre qui lui sont imposées (sol ou plan d'eau) et il possède une bonne tenue aux vents. Cela, parce que la tension des parois des chambres et de leur couverture d'isolation convenablement gonflées, est supérieure à la pression exercée par les vents usuels les plus forts et que, d'autre part, des moyens efficaces de fixation de l'appareil sont aisés à installer et à mettre en oeuvre. Ces avantages sont particulièrement apparents pour un alambic solaire à cellules de distillation multiples, du fait que pour une grande surface absorbante, on dispose d'un encombrement réduit et d'une faible hauteur relative.

Les caractéristiques et avantages de l'invention ressortiront d'une manière plus précise de la description ci-après de formes de réalisation de l'invention, données à titre d'exemples non limitatifs, en référence aux dessins annexés dans lesquels:
- la figure 1 représente une vue de côté schématique d'un alambic solaire de production d'eau douce selon une première forme particulière de réalisation optimale de l'invention;
- la figure 2 représente une coupe transversale de l'unité précédente, montée sur un berceau installé sur le sol;
- la figure 3 représente une vue en coupe transversale de cette unité installée sur un plan d'eau;
- la figure 4 représente une vue perspective d'un alambic solaire de production d'eau douce, selon une deuxième forme particulière de réalisation optimale de l'invention;
- la figure 5 représente une vue en coupe d'une forme de réalisation intéressante d'un alambic solaire de production d'eau douce selon l'invention;

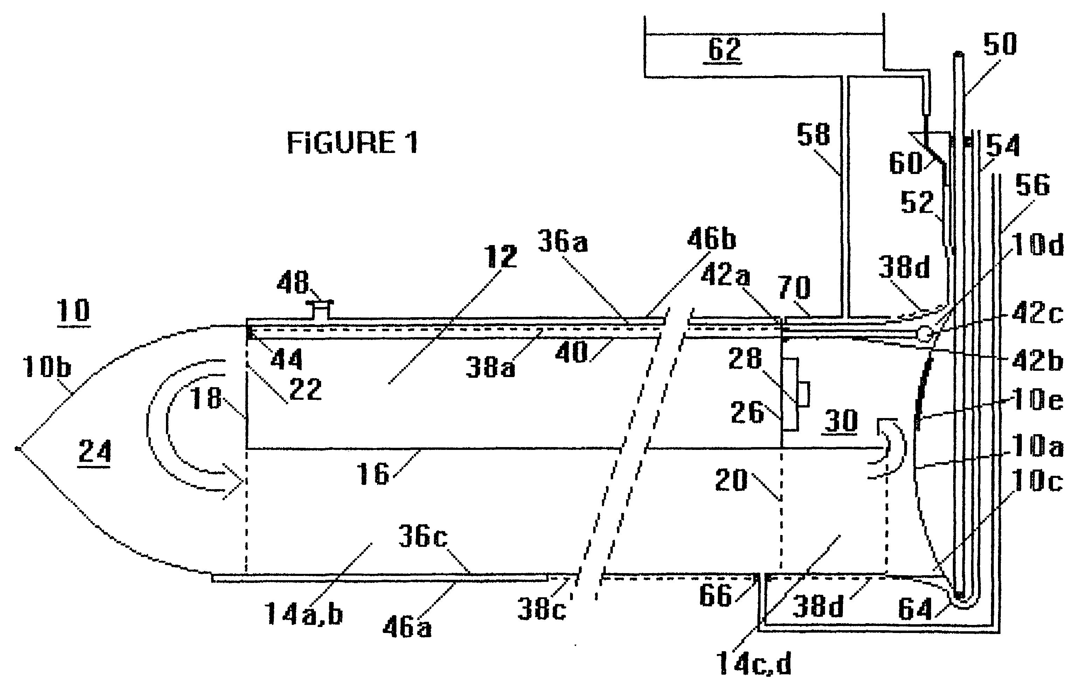

La figure 1 représente une vue longitudinale d'une forme de réalisation optimale d'un alambic solaire de production d'eau douce selon l'invention. Il comprend une enceinte 10, à parois souples, adaptée à être gonflée d'air de manière à lui donner une certaine raideur et à lui faire prendre la forme d'un long cylindre à section circulaire. Sur la figure 1, l'extrémité droite 10a et gauche 10b de cette enceinte 10 sont fermées par des lignes de soudure respectivement effectuées dans le plan de la figure et suivant une perpendiculaire à ce plan. Dans ces conditions, les bords d'extrémité de l'enceinte cylindrique à section circulaire relativement raide 10 forment deux cornes débordantes telles 10 c,d à l'extrémité droite. A titre d'exemple, une telle unité 10 aura une longueur de 10 m et un diamètre de 1 m.

En référence aux figures 1-2, dans cette enceinte 10, sont aménagées une chambre d'évaporation 12 exposée au soleil et une première chambre de condensation 14, disposée à l'ombre, les deux chambres 12-14 étant séparées par une cloison mitoyenne longitudinale 16, formant deux plans symétriques 16 a,b sensiblement orthogonaux.

La chambre d'évaporation 12 comporte deux cloisons transversales d'extrémité 18-20. La cloison d'extrémité gauche 18 de la chambre d'évaporation 12 est imperméable et elle comporte dans sa partie supérieure une large ouverture 22 en forme de segment circulaire et dans sa partie centrale, ses bords sont soudés à la paroi extérieure de la chambre d'évaporation 12. Dans sa partie inférieure, cette cloison 18 est soudée aux bords gauches des deux plans 16 a,b de la cloison mitoyenne 16, la ligne de liaison de ces plans étant elle-même soudée à la ligne de fond de la première chambre de condensation 14. De ce fait, la première chambre de condensation 14 comprend deux tubes 14a-14b dont les sections ont la forme de segments circulaires symétriques. Les deux ouvertures amont de la première chambre de condensation 14 débouchent dans l'extrémité gauche 10b de l'enceinte 10. Cette extrémité 10b constitue une pièce intermédiaire 24, à paroi imperméable souple de couleur noire, faisant communiquer la sortie de la chambre d'évaporation 12 et l'entrée de la première chambre de condensation 14.

La cloison d'extrémité droite 20 de la chambre d'évaporation 12 comporte dans sa partie supérieure une ouverture circulaire 26 dans laquelle est installé un ventilateur électrique 28. Par ailleurs, les bords de la cloison 20 sont soudés à la paroi circulaire de la chambre d'évaporation 12 et aux bords droits des plans 16 a,b de la cloison mitoyenne 16.

Les extrémités aval des deux tubes de condensation 14 a,b débouchent dans l'extrémité droite 10a de l'unité 10, à travers deux manchons 14 c,d prolongeant ces tubes. Cette extrémité 10a constitue une pièce intermédiaire 30 faisant communiquer la sortie de la première chambre de condensation 14 et l'entrée de la chambre d'évaporation 12.

La partie de paroi exposée au soleil de la chambre d'évaporation 12 est constituée par une membrane extérieure 36a, imperméable et sombre (une feuille de polyéthylène noir, de 50 à 100 microns d'épaisseur, par exemple), et une nappe intérieure hydrophile 38a (un non-tissé de cellulose relativement épais par exemple), fixées l'une à l'autre par un adhésif adéquat. Les deux plans 16 a,b de la cloison mitoyenne 16 comprennent de même une nappe hydrophile 38b du côté de la chambre d'évaporation 12 et une membrane imperméable 36b (d'un type agréé pour emballage alimentaire), du côté des deux tubes 14 a,b à section en forme de segments circulaires symétriques constituant la première chambre de condensation 14.

A l'intérieur de la chambre d'évaporation 12, le long de sa génératrice supérieure, est installé un conduit 40, alimenté par l'eau à distiller, adapté à humidifier par capillarité et gravité la nappe hydrophile 38a. Le conduit 40 est pourvu d'un raccord 42a à une extrémité et d'un bouchon 44 à l'autre. Une forme de réalisation de ce conduit 40 sera décrite en détail ci-après. Un tuyau 42b relie le raccord 42a à un autre raccord 42c fixé à la pointe de la corne 10d de l'extrémité 10a de l'unité.

La paroi extérieure, commune aux deux tubes 14 a,b de la première chambre de condensation 14, comprend à l'intérieur une membrane imperméable 36c (identique à la membrane 36b) et, à l'extérieur, une feuille d'isolation thermique relativement longue 46a disposée en revêtement au moins sur la partie gauche du fond extérieur de la première chambre de condensation 14. Le cas échéant, une nappe hydrophile humide 38c, en partie exposée à l'air, sera disposée sur la partie droite du fond extérieur de la première chambre de condensation 14. L'intérêt de la présence du revêtement isolant 46a ainsi que les longueurs respectives et l'écartement éventuel des revêtements hydrophile 38c et isolant 46a seront déterminées expérimentalement.

La paroi de la pièce intermédiaire 30, située à l'extrémité droite 10a de l'alambic 10, comporte une membrane intérieure imperméable 36d (identique aux membranes 36 b,c) et un revêtement hydrophile extérieur 38d, exposé à l'air, protégé du soleil par un pare-soleil (non représenté) et maintenu humide par un apport d'eau permanent, comme cela sera précisé ci-après. Dans ces conditions, la pièce intermédiaire 30 constitue à la fois une deuxième chambre de condensation et l'antichambre de la chambre d'évaporation 12.

Pour conserver autant que possible la capillarité et la souplesse initiales des nappes hydrophiles 38 a,b,c,d, la colle utilisée pour fixer ces nappes aux membranes imperméables 36 a,b,c,d aura une faible fluidité et sa consistance finale sera plastique.

La paroi de la chambre d'évaporation 12 exposée au soleil est placée sous un couverture d'isolation thermique transparente et gonflable 46b, emprisonnant une couche d'air sec de faible épaisseur (3 cm, par exemple). Les bords de la couverture 46b sont soudés à l'unité 10, le long de la ligne de raccordement de la cloison 16 et des parois des deux chambres 12-14. Le gonflage de la couverture 46b est assuré par tout moyen approprié. A cet effet, elle comporte un raccord 48 qui sera bouché dès la fin du gonflage. Le volume de la couche d'air emprisonné sous la couverture 46b augmentera avec la température mais sa pression ne variera guère.

L'extrémité droite 10a de l'alambic 10 est montée solidaire d'un mât 50, le long duquel sont fixés quatre tuyaux 52, 54, 56 et 58, respectivement affectés à l'alimentation en eau de mer du conduit 40 et des revêtements hydrophiles extérieurs 38 c,d, ainsi qu'à l'évacuation de l'eau distillée et de la saumure. Au tuyau 52 d'alimentation en eau de l'unité, est associé un entonnoir 60, dans lequel se déverse à débit constant l'eau de mer contenue dans un réservoir surélevé 62 ouvert à l'air libre, alimenté par une pompe électrique, elle-même à débit constant, non représentée. La colonne d'eau à hauteur variable, contenue dans le tuyau vertical 52, permet de maintenir un débit entrant constant dans l'alambic 10, malgré les variations de pression (de 10 à 50 hPa, par exemple), dues à l'ensoleillement.

Le tuyau vertical 54 d'évacuation de l'eau distillée, accumulée dans les pièces 14 a,b de la première chambre de condensation 14 et dans la seconde chambre de condensation 30, est relié à un raccord 64 monté sur la pointe de la corne inférieure 10c de l'extrémité droite 10a de l'unité. Le tuyau 56 d'évacuation de la saumure est relié à un raccord 66, monté à l'extrémité droite de la ligne de liaison des deux plans 16 a,b de la cloison mitoyenne 16. Les prélèvements d'eau douce et de saumure seront faits par des siphons ou des pompes non représentés. Le tuyau 58 aboutit à un conduit 70, à paroi perméable, installé au-dessus de la seconde chambre de condensation 30, pour humidifier les revêtements extérieurs 38 c,d des chambres de condensation.

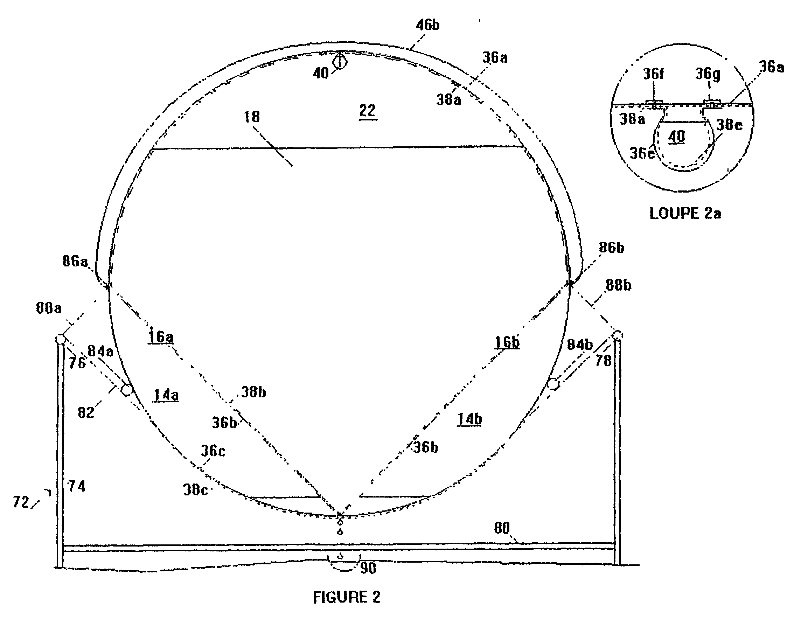

La figure 2 représente la coupe transversale d'un alambic solaire 10 installé sur un berceau 72, adapté à dégager le fond de la chambre de condensation 14 et à le maintenir exposé à l'air libre. Pour ce faire, le berceau 72 est monté sur des pieds 74, fixés au sol (ou sur le fond d'un plan d'eau peu profond). Le berceau 72 comporte deux longerons rigides 76-78 à section circulaire, reliés ensemble par des traverses 80 et par des bandes de tissu 82 fixées aux longerons 76-78 par tout moyen approprié. Sur ces bandes 82 pourront, le cas échéant, être disposés deux conduits 84 a,b, identiques aux conduits 40-70, alimentés en eau de mer par le tuyau 58 ou en saumure par le tuyau 56, destinés à constamment humidifier le revêtement hydrophile 38c du fond extérieur des deux tubes 14 a,b de la première chambre de condensation 14.

Le long de la partie haute de la chambre d'évaporation 12, sont cousus les bords, convenablement rapprochés en forme de U (cf. loupe 2a), d'une bande relativement large, à deux couches 36e et 38e identiques à celles 36a et 38a de la paroi de la chambre 12. La couche hydrophile 38e est à l'intérieur et en contact avec la nappe hydrophile 38a de la chambre d'évaporation 12, la couche imperméable 36e étant à l'extérieur. De la sorte est constitué le conduit 40, adapté à alimenter en eau de mer la chambre d'évaporation 12 de manière à humidifier, par capillarité et gravité, les deux nappes hydrophiles 38 a,b qui tapissent l'intérieur de cette chambre 12. Pour conserver l'imperméabilité de la membrane 36a, des bandes de même matière 36 f,g lui sont soudées, par-dessus chacune des coutures réalisées.

Selon la figure 1, une ouverture allongée 10e est aménagée dans la paroi d'extrémité droite 10a de l'alambic 10. Cette ouverture 10e permet la mise en place du ventilateur électrique 28 et le gonflement initial de l'appareil. Elle est ensuite bouchée d'une manière étanche par tout moyen approprié. En outre, une prise électrique non représentée permet l'alimentation du ventilateur 28.

Le long des deux lignes longitudinales de raccordement des parois des chambres 12-14, de la cloison 16 et de la couverture 46, sont montés deux cordons 86 a,b sur lesquels sont accrochées des attaches 88 a,b permettant la fixation de l'alambic 10 sur les longerons 76-78 du berceau 72. Lorsque l'unité 10 est installée sur le sol, un caniveau 90 de récupération de la saumure sera prévu.

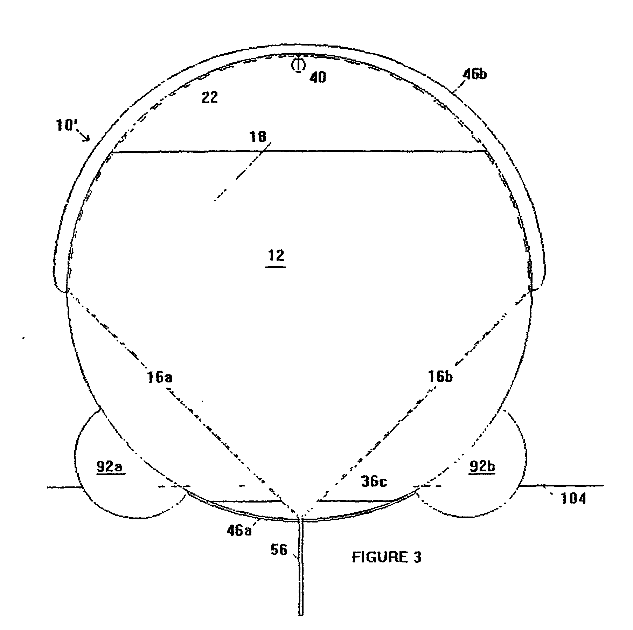

La figure 3 représente une vue en coupe d'un alambic solaire 10', installé sur un plan d'eau. Cet alambic 10' diffère principalement de l'alambic 10 par ses moyens de stabilisation, lesquels seront constitués par des ballasts remplis d'eau 92 a,b, symétriquement soudés le long de génératrices de l'enceinte cylindrique. La partie gauche du fond commun des pièces principales 14 a,b de la première chambre de condensation 14 comporte un revêtement d'isolation thermique 46a cependant que sur la partie droite de ce fond le revêtement hydrophile 38c deviendra inutile. Les parois extérieures de la chambre d'évaporation 12 et de la première chambre de condensation 14 seront réalisées en des matériaux de type marin, semblables à ceux des bateaux pneumatiques. Des anneaux d'attache (non représentés) seront fixés à ces ballasts. Le tuyau 56 d'évacuation de la saumure sera immergé à la verticale. Sa longueur permettra de limiter la surpression interne de l'alambic 10' à une valeur arbitraire donnée (50 cm pour 50 hPa, par exemple).

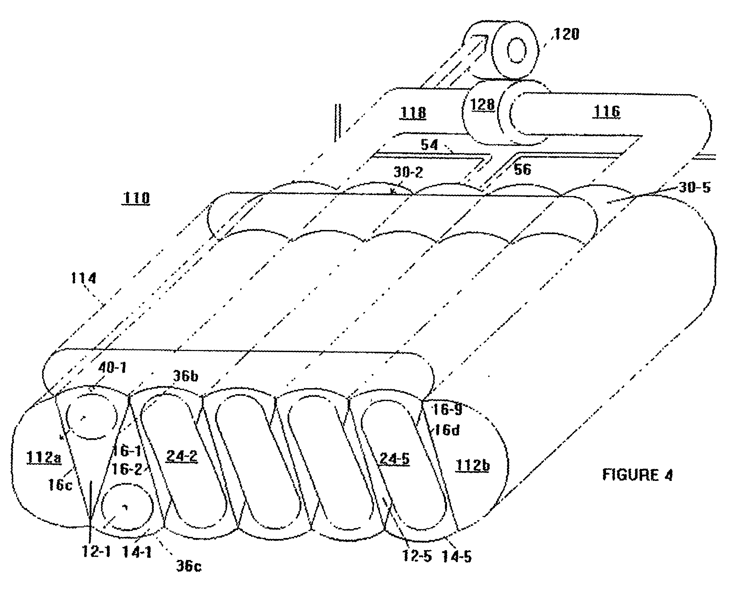

Selon la figure 4, en accord avec les références de la figure 1, est représentée une vue perspective schématisée d'un alambic solaire 110 de production d'eau douce. L'alambic 110 a la forme d'un grand matelas pneumatique comportant une pluralité (limitée à 5 dans le dessin) de cellules de distillation montées en série. Chacune de ces cellules de distillation comprend une chambre d'évaporation 12-1...12-5, une première chambre de condensation 14-1...14-5 et une seconde chambre de condensation 30-1...30-5. Ces trois types de chambres possèdent des parois doubles (membrane noire imperméable et nappe hydrophile) respectivement disposées comme celles des chambres 12, 14 et 30 de la fig. 1. Les nappes hydrophiles internes 38 a,b des chambre d'évaporation 12-1...12-5 sont alimentées en eau à distiller par des conduits 40-1...40-5 et les nappes hydrophiles externes 38 c,d des deux types de chambres de condensation 14-1... 14-5 et 30-1...30-5, sont alimentées par des tyaux et conduits non représentés semblables à ceux 58, 70, 84 des figures 1 et 2.

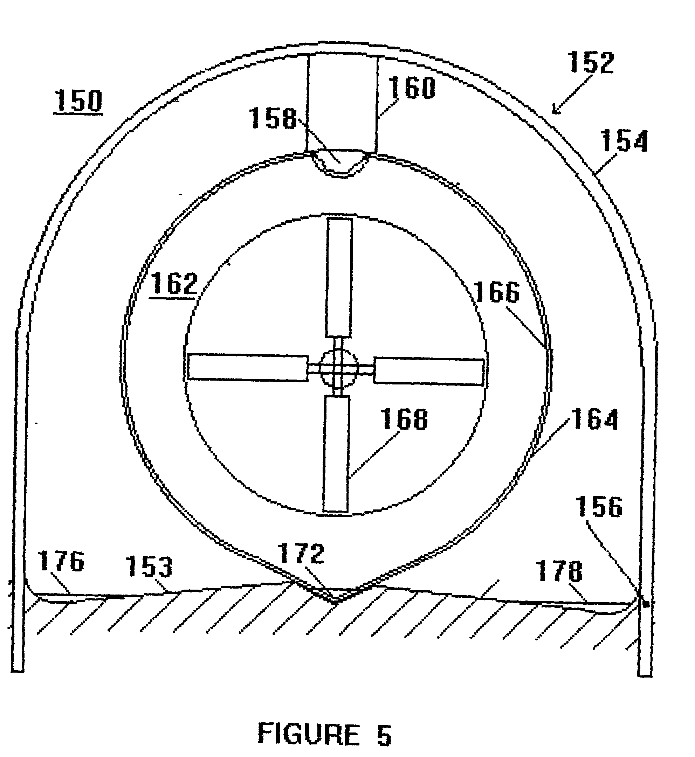

Sur la tranche du matelas formé par l'alambic 110 qui se voit sur la figure 5, apparaissent des manchons 24-2...24-5, équivalents de la pièce intermédiaire 24 de la figure 1, qui relient les extrémités attenantes des couples de chambres 12-2/14-2... 12-5/14-5. Le manchon qui relie le couple de chambres 12-1/14-1 n'a pas été dessiné pour laisser voir les ouvertures pratiquées dans les parois des extrémités attenantes de ces chambres.

A la première chambre d'évaporation 12-1 et à la dernière chambre de condensation 14-5 de l'appareil, sont respectivement associées deux chambres de protection 112a et 112b. La section de ces chambres 112 a,b est en forme de demi-cercle. La cloison mitoyenne 16c des chambres 12-1 et 112a et celle 16d des chambres 14-5 et 112b comportent quelques perforations à travers lesquelles les chambres 112 a,b se remplissent d'un air humide non renouvelé. Une couverture transparente gonflable unique 114 abrite les parois exposées au soleil des cinq chambres d'évaporation 12-1...12-5. Les parois extérieures des chambres d'évaporation et des premières chambres de condensation de l'alambic 110 ont une forme bombée et leurs cloisons mitoyennes, une forme plane. Les sections droites de ces chambres ont sensiblement la forme d'une secteur circulaire, avec un angle au sommet d'environ 40°, pointe en bas pour les chambres d'évaporation et pointe en haut pour les premières chambres de condensation. Dans ces conditions, la longueur totale des deux rayons de ces secteurs est environ trois fois supérieure à celle de la ligne circulaire.

Les bords des cloisons mitoyennes 16-1...16-9 de l'alambic 110 sont fixées sur les parois extérieures de ses chambres de deux manières différentes. Ces fixations seront des coutures pour les pointes des premières chambres de condensation, puisque les revêtements hydrophiles internes 38a des zônes chaudes contigües de deux chambres d'évaporation successives, telles 12-1 et 12-2, sont en contact avec le revêtement hydrophile externe 38b d'une première chambre de condensation, telle 14-1. Ces coutures seront ensuite rendues étanches, par tout moyen approprié, vis-à-vis de la couche d'air sec emprisonné sous la couverture transparente 114. L'autre type de fixation sera une soudure entre les pointes des membranes externes 36b des chambres d'évaporation et deux membranes internes 36c de deux premières chambres de condensation contigües.

Les tuyaux (non représentés) d'évacuation de l'eau distillée et de la saumure produites par chaque cellule de distillation sont raccordés à deux canalisations de collecte, reliées à deux tuyaux 54-56 comme sur figure 1.

Selon la figure 4, la seconde chambre de condensation 30-5 comporte une ouverture de sortie (non apparente) sur laquelle est branché le manchon d'entrée 116 du ventilateur 128. De même, la cloison d'extrémité droite de la chambre d'évaporation 12-1 comporte une ouverture d'entrée sur laquelle est branché le manchon de sortie 118 du ventilateur 128. Sur ce manchon 118 est connectée la sortie d'une turbine 120 dont l'entrée communique avec l'extérieur. La fonction de cette turbine 120 est de maintenir, dans les cellules de distillation, un écart de pression constant (1 à 2 hPa) par rapport à l'extérieur, quelles que soient les conditions de température et de pression.

Les premières chambres de condensation 14-1...14-5 débouchent dans les secondes chambres de condensation 30-1...30-5 et ces dernières constituent les antichambres des chambres d'évaporation 12-2...12-1. Quant à la chambre d'évaporation et à la première chambre de condensation d'une même cellule de distillation, elles communiquent entre elles soit indirectement par des manchons soit directement à travers une ouverture pratiquée dans leur cloison commune.

A titre d'exemple, un alambic 110 comprendra dix cellules de distillation mesurant chacune 40 cm de large, 6 m de long et 60 cm de haut.

L'alambic 110 est adapté à être installé à même le sol, sur un plan d'eau ou sur un sommier. Dans le cas où il est installé à même le sol, le fond extérieur commun des premières chambres de condensation ne comportera ni revêtement isolant 42a ni revêtement hydrophile humide 38c, mais les revêtements hydrophiles humides 38d des secondes chambres de condensation seront, quant à eux, totalement dégagés du sol, par tout moyen approprié. Par ailleurs, il comportera des anneaux d'attache, fixés aux chambres extérieures 112 a,b.

Grâce à ces dispositions, on réalise des alambics solaires de production d'eau douce 10-10' et 110 à la fabrication aisée et peu onéreuse (semblable à celle des bateaux pneumatiques), à rendement élevé, à la mise en oeuvre et à l'entretien commode, présentant une bonne tenue aux vents forts.

En effet, en référence à la figure 1 (mais les arguments présentés seraient sensiblement identiques pour la figure 4), grâce à la couche d'air sec de faible épaisseur, emprisonnée sous la couverture transparente étanche 46b qui abrite la zône chaude de la chambre d'évaporation 12, la chaleur absorbée par cette zône est notablement plus élevée que celle absorbée par de telles zônes chaudes, dans les alambics solaires de type conventionnel. Cela parce qu'un problème ne se pose plus, à savoir son échauffement réduit par l'ombre des gouttes d'eau condensée, qui était relativement important dans le cas de la surface de condensation, constituée par la face interne de l'habitacle décrit dans le brevet cité en préambule.

En arrivant dans la première chambre de condensation 14, la vapeur d'eau emportée par l'air chaud qui sort de la chambre d'évaporation 12 se condense immédiatement par diffusion, avec recyclage de la chaleur latente, sur les parois imperméables 36c, à température inférieure, des cloisons mitoyennes 16 a,b de la première chambre de condensation 14. La présence d'un revêtement 46a d'isolation thermique, relativement long commençant à l'entrée de la première chambre de condensation évite de dériver, vers une zône refroidie de l'extérieur, un air chaud à haute teneur en vapeur d'eau, entraînant une condensation partielle de cette vapeur, sans recyclage de chaleur latente. Comme cela a été dit plus haut, ce phénomène de condensation avec recyclage élevé de chaleur latente se poursuit tout au long de la traversée de cette première chambre de condensation 14, avec un air de moins en moins chaud et humide, jusqu' au refroissement final de cet air, opéré dans la seconde chambre de condensation, avant son retour dans la chambre d'évaporation.

Au fur et à mesure que l'air avance dans la première chambre de condensation 14, il s'assèche et se refroidit, de sorte que la récupération de la chaleur latente de condensation devient moins efficace. Pour compenser cette diminution, une première et une seconde condensation complémentaire, sans recyclage de chaleur latente, sont effectuées sur la paroi intérieure de la partie droite du fond extérieur de la chambre de condensation 14 et sur celle de la seconde chambre de condensation 30. Dans les deux cas, les parois extérieures concernées comportent des revêtements hydrophiles 38 c,d, exposés à l'air extérieur et constamment humidifiés, ce qui leur fait prendre un température tendant vers la température du point de rosée de cet air, laquelle est particulièrement basse dans les régions sèches. On notera que ces revêtements hydrophiles extérieurs 38 c,d sont exposés à une usure inévitable et seront donc réalisés en une matière appropriée, en un bon tissu de coton par exemple.

De ce qui précède, il résulte qu'avec des quantités de chaleur absorbée notablement plus élevées, des zônes de condensation multiples présentant une bonne récupération de chaleur latente pour la première de ces zônes et une température particulièrement basse pour la dernière, les alambics solaires de production d'eau douce, selon les formes de réalisation optimales de la présente invention, possèdent un rendement a priori supérieur à 2 et, de toutes façon, notablement plus élevé que celui de tous les appareils conventionnels décrits jusqu'à présent. A cet avantage technique s'ajoutent des conditions économiques de construction, d'exploitation et d'entretien particulièrement intéressantes.

Les dimensions et les formes (cylindres ou matelas) des alambics solaires de production d'eau douce selon l'invention, seront adaptés aux marchés concernés. Les installations industrielles de production d'eau douce comporteront une pluralité d'unités ayant chacune une surface absorbante relativement grande. Dans une telle installation, chaque hectare occupé au sol produira par jour, un volume total d'eau douce de l'ordre de 200 m³. Pour le marché domestique, on proposera un matelas (ou un ensemble de cylindres) d'environ 10 m² de surface absorbante à installer à même le sol ou sur une terrasse. Ce qui permettra à une famille de disposer de 200 litres d'eau douce par jour. Pour les naufragés, on proposera un matelas (ou un cylindre) équipé de ballasts à remplir d'eau, ayant 1 à 2 m² de surface absorbante. Pour la navigation de plaisance, ce seront des appareils flottants ayant 10 à 20 m² de surface absorbante.

La figure 5 représente une vue en coupe transversale d'une forme de réalisation non optimale mais cependant intéressante d'un alambic solaire de production d'eau douce selon l'invention. Cet alambic 150 comprend un habitacle 152 à paroi transparente 154, relativement étanche. Il sera, par exemple, du genre serre agricole, avec une paroi en polyéthylène transparent, installée sur des arceaux 156 plantés en terre à intervalles réguliers. L'habitacle 152 aura par exemple quelques dizaines de mètres de long et quelques mètres de haut et de large. Une gouttière rigide 158 d'alimentation en eau de mer est suspendue par des suspentes 160 aux arceaux 156. L'habitacle 152 abrite une chambre d'évaporation 162 dont la paroi longitudinale est formée par une membrane extérieure imperméable noire en polyéthylène 164, pourvue d'un revêtement intérieur constitué par une nappe hydrophile 166. Les bords de cette membrane et de cette nappe sont fixés par des pinces (non représentées) sur les bords de la gouttière 158, de telle façon que 1a membrane 164 et la nappe 166 plongent dans l'eau de mer apportée par la gouttière 158. Un ventilateur électrique 168, monté dans un cadre suspendu à un arceau 156 de l'habitacle 152, est installé dans la paroi d'extrémité amont de la chambre d'évaporation 162. En fonctionnement, le ventilateur 168 gonfle cette chambre 162 et fait prendre à sa paroi la forme d'un long cylindre à section circulaire. Lorsque le ventilateur 168 est à l'arrêt, la chambre 162 est dégonflée et son fond repose sur le sol. La paroi d'extrémité aval de la chambre d'évaporation 162 comporte une large ouverture dans sa partie supérieure. Un tuyau 172 d'évacuation de la saumure est branché en un point bas de la ligne de fond de cette chambre d'évaporation. Le fond de l'habitacle 152 comporte un revêtement imperméable 153. De plus ce fond 153 présente une légère pente longitudinale ainsi que deux pentes latérales symétriques aboutissant à deux gouttières de collecte d'eau douce 176-178, disposées au bas des parois verticales de l'habitacle 152. Ces gouttières sont raccordées à une canalisation extérieure d'évacuation d'eau douce non représentée.

Le fonctionnement de l'alambic solaire 150 est semblable à celui de l'appareil représenté à la figure 1. Il en diffère toutefois par le fait que la surface de condensation est constituée par la face interne de la paroi transparente de l'habitacle 152 et non par la paroi d'une chambre de condensation uniquement affectée à cette fonction. Dans ces conditions, la buée déposée sur la face interne de l'habitacle diminue quelque peu le rayonnement solaire absorbé par la paroi noire de la chambre d'évaporation 162. Quant aux gouttes d'eau condensée qui, sous leur poids, tombent sur la membrane imperméable 164, elle aboutissent finalement dans les gouttières de collecte d'eau douce 176-178. Un des inconvénients des alambics solaires conventionnels, décrits dans le brevet cité en préambule, est donc supprimé. On notera qu'une certaine récupération de chaleur latente de condensation de la vapeur peut vraisemblablement se produire sur la paroi à l'ombre de la chambre d'évaporation 162. Le rendement de cet alambic est supérieur à celui des appareils conventionnels mais bien évidemment notablement inférieur à celui des appareils selon les figures 1 et 4.

L'invention n'est pas limitée aux formes de réalisation de l'invention décrites ci-dessus. En effet, dans un alambic solaire de production d'eau douce selon la figure 5, on pourra supprimer le ventilateur et remplacer la chambre d'évaporation cylindrique par une surface plane tendue sur un cadre, convenablement orientée face au soleil et réalisée au moyen d'une membrane imperméable noire, pourvue d'un revêtement hydrophile. De même, dans un alambic solaire de petites dimensions selon la figure 1, on pourra supprimer le ventilateur ainsi que la première chambre de condensation et replier en U la chambre d'évaporation, la chambre de condensation restante étant disposée entre les deux extrémités de cette dernière. Dans les deux cas, une diffusion naturelle de la vapeur se produira depuis la nappe hydrophile humide et chaude vers une surface de condensation relativement froide. Dans le deuxième cas, on pourra, avec des moyens réduits et un rendement faible, produire la quantité journalière d'eau douce suffisante pour un naufragé ou un campeur.

Si maintenant on s'intéresse aux conditions économiques de construction et d'exploitation des alambics solaires de production d'eau de mer selon l'invention, décrits plus haut, on voit qu'ils ont comme composant principal un matériau nouveau constitué par une membrane en polyéthylène noir collée sur une nappe hydrophile en non-tissé de cellulose. Ce matériau composite revient à moins de un franc français par mètre carré.

Compte-tenu, d'une part, des faibles coûts de fonctionnement et d'entretien d'une centrale solaire industrielle de production d'eau douce, comportant un grand nombre d'alambics solaires selon l'invention et, d'autre part, des coûts réduits de renouvellement des composants (la durée de vie des membranes est estimée à au moins deux ans), le prix de revient d'un mètre cube d'eau douce, produit par une telle centrale devrait, dans les régions sèches proches du littoral, être au plus du même ordre de grandeur que celui des eaux potables, fournies dans les régions tempérées du globe à partir des cours d'eau et des nappes phréatiques. Dans le cas des grandes intallations solaires industrielles produisant plusieurs milliers de mètres cubes d'eau douce par jour, il sera tout indiqué de récupérer la saumure et de la déverser dans un marais salant. Les revenus, tirés de la commercialisation du sel ainsi obtenu, permettront de répartir l'investissement sur deux produits et donc de notablement diminuer le prix de revient du mètre cube d'eau douce produit.

Les emplois possibles de l'eau distillée ainsi produite sont, après traitement adéquat éventuel, identiques à ceux (domestiques, industriels et agricoles) des eaux douces disponibles dans les régions tempérées.

La mise en oeuvre de l'invention repose sur la disponibilité d'un produit industriel nouveau, destiné à être utilisé pour constituer la paroi extérieure de la chambre d'évaporation d'un alambic solaire de production d'eau douce. Ce produit industriel nouveau comporte deux composants. L'un est une membrane souple, imperméable et de couleur sombre, ayant une bonne résistance mécanique, une bonne tenue aux rayons ultra-violets et à l'eau salée (une pellicule de polyéthylène noir, par exemple). L'autre est une nappe hydrophile possédant une bonne tenue à l'eau salée (de préférence un non-tissé de cellulose). Les deux composants sont fixés l'un à l'autre par des moyens adhésifs respectant les caractéristiques propres à chacun. Quant aux cloisons mitoyennes des alambics décrits, on notera que la couleur de la membrane n'a aucune importance et que, dans ces conditions, on pourra faire appel aux membranes imperméables blanches à revêtement de cellulose, couramment utilisées dans les hôpitaux comme draps de dessous des lits. Cela toutefois, dans la mesure où ces membranes résistent à l'eau salée et sont agréées pour usage alimentaire.

## Revendications

1. Alambic solaire de production d'eau douce comprenant:
- une chambre d'évaporation (12-162), possédant une paroi souple légèrement tendue constituée par une membrane imperméable de couleur sombre (36a-164), exposée au soleil, pourvue d'un revêtement hydrophile (38a-166), disposé à l'ombre;
- une chambre de condensation (14-30-152) possédant une paroi imperméable (36c-154), en contact avec le milieu extérieur adaptée à dissiper dans ce milieu la chaleur latente de condensation de la vapeur produite;
- **caractérisé en ce que**:
- la chambre d'évaporation (12-162) est de forme allongée et, par ses extrémités (22-26), elle communique avec la chambre de condensation (14-30-152);
- un ventilateur (28) est installé dans l'appareil, pour faire circuler un courant d'air en boucle fermée entre ces deux chambres (12-14/30 ou 162-152);
- un conduit (40-158), alimenté en eau à distiller, est adapté à distribuer cette eau, par capillarité et gravité, sur le revêtement hydrophile (38a-166);
- un conduit (54-176), adapté à évacuer l'eau douce produite, est installé en un point bas (64) de la chambre de condensation (14/30-152);
- un conduit (56-172), adapté à évacuer la saumure produite, est installé en un point bas (56) de la chambre d'évaporation (12-162).

2. Alambic solaire de production d'eau douce selon la revendication 1,
**caractérisé en ce que**:
- la chambre d'évaporation (162) est installée sous un habitacle transparent fermée (152) et elle est gonflée par l'action du ventilateur (28);
- la chambre de condensation est constituée par le volume de l'habitacle (152) extérieur à 1a chambre d'évaporation (162), la vapeur se condensant sur la face interne de cet habitacle.

3. Alambic solaire de production d'eau douce selon la revendication 1, comportant une chambre d'évaporation (12) pourvue d'une couverture d'isolation thermique transparente (46b);
- **caractérisé en ce que**:
- les chambres d'évaporation (12) et de condensation (30) ont toutes deux des parois imperméables souples et elles communiquent entre elles par des ouvertures (22-26), pratiquées dans les parties hautes des cloisons d'extrémités (18-20) de la chambre d'évaporation (12);
- la chambre de condensation (30) est à l'ombre et sa paroi en contact avec le milieu extérieur est pourvue d'un revêtement hydrophile extérieur (38d), maintenu humide par tout moyen approprié, au moins en partie exposé à l'air du milieu extérieur;
- des moyens appropriés (10e-54-120) sont associés au ventilateur (28) pour permettre de gonfler les deux chambres (12-30) et pour y maintenir une légère surpression.

4. Alambic solaire de production d'eau douce selon la revendication 1, comportant une chambre d'évaporation (12) pourvue d'une couverture d'isolation thermique transparente (46b);
- **caractérisé en ce que**:
- les chambres d'évaporation (12) et de condensation (14) ont toutes deux des parois imperméables souples et elles communiquent entre elles par des ouvertures (22-26), pratiquées dans les parties hautes des cloisons d'extrémités (18-20) de la chambre d'évaporation (12);
- la chambre de condensation (14) est à l'ombre et sa paroi (36c), en contact avec le milieu extérieur, est pourvue d'un revêtement hydrophile extérieur (38c), maintenu humide par tout moyen approprié, au moins en partie exposé à l'air du milieu extérieur;
- la chambre de condensation (14) est par ailleurs séparée de la chambre d'évaporation (12) par une cloison mitoyenne longitudinale (16), adaptée à recycler dans la chambre d'évaporation (12) une partie de la chaleur latente de condensation de la vapeur;
- des moyens appropriés (10e-54-120) sont associés au ventilateur (28) pour permettre de gonfler les deux chambres (12-14) et pour y maintenir une légère surpression.

5. Alambic solaire de production d'eau douce selon la revendication 1, comportant une chambre d'évaporation (12) pourvue d'une couverture d'isolation thermique transparente (46b);
- **caractérisé en ce que**:
- une première chambre de condensation (14) est séparée de la chambre d'évaporation (12) par une cloison mitoyenne longitudinale (16), adaptée à assurer un recyclage de la chaleur latente de condensation dans la chambre d'évaporation (12);
- une seconde chambre de condensation (30), disposée à l'ombre à la suite de la première (14), en antichambre de la chambre d'évaporation (12), est pourvue d'un revêtement hydrophile extérieur (38d), maintenu humide par tout moyen approprié et, au moins en grande partie, exposé à l'air du milieu extérieur;
- la chambre d'évaporation (12) ainsi que la première (14) et la seconde (30) chambres de condensation ont toutes trois des parois imperméables souples;
- des ouvertures (22-26), pratiquées dans les parties hautes des cloisons d'extrémités de la chambre d'évaporation (12) font communiquer l'aval de la chambre d'évaporation (12) avec l'amont de la première chambre de condensation (14) et l'amont de cette chambre (12) avec l'aval de la seconde chambre de condensation (30);
- le ventilateur (28) fait circuler en boucle fermée un courant d'air dans les trois chambres (12-14-30) et des moyens appropriés (10e-54-120) lui sont associés pour permettre de gonfler les trois chambres (12-14-30) et pour y maintenir une légère surpression.

6. Alambic solaire selon la revendication 5, **caractérisé en ce que** la première chambre de condensation (14) est thermiquement bien isolée (46a) du milieu extérieur.

7. Alambic solaire selon la revendication 5, **caractérisé en ce que** la première chambre de condensation (14) possède une paroi (36c) en contact avec le milieu extérieur, cette paroi (36c) étant pourvue d'un revêtement isolant (46a) et/ou d'un revêtement hydrophile (38c), maintenu humide par tout moyen approprié.

8. Alambic solaire selon l'une des revendication 3, 4, 5, **caractérisé en ce que** les moyens pour engendrer une telle surpression comprennent de préférence une turbine (120) aspirant l'air extérieur.

9. Alambic solaire selon l'une des revendications 4 et 5, **caractérisé en ce que** la cloison mitoyenne longitudinale (16), séparant les chambres d'évaporation (12) et de condensation (14), comporte une membrane imperméable (36b) du côté de la chambre de condensation (14) et un revêtement hydrophile (38b) du côté de la chambre d'évaporation (12), ce revêtement (38b) étant alimenté en eau à distiller par tout moyen approprié.

10. Alambic solaire selon la revendication 9, **caractérisé en ce que** la forme géométrique de la section droite de la cloison mitoyenne (16) est adaptée à maximiser les échanges thermiques entre la chambre de condensation (14) et la chambre d'évaporation (12).

11. Alambic solaire selon la revendication 5, **caractérisé en ce que** un conduit souple (14 c,d), installé entre l'extrémité aval de la première chambre de condensation (14) et l'extrémité amont de la seconde chambre de condensation (30), est adapté à maximiser les échanges thermiques entre les flux d'air chaud humide sortant de ce conduit (14 c,d) et la face interne de la paroi extérieure de la seconde chambre de condensation (30).

12. Alambic solaire selon l'une des revendications 3, 4, 5 **caractérisé en ce qu'**il se présente sous la forme l'un long cylindre à section circulaire gonflé d'air sous légère surpression, enveloppant les différentes chambres (12-14-30) de l'appareil (10).

13. Alambic solaire de production d'eau douce selon la revendication 4, **caractérisé en ce que**:
- l'appareil constitue une sorte de grand matelas pneumatique (110), formé par une pluralité de cellules de distillation;
- chaque cellule de distillation comporte, disposées en série, une chambre d'évaporation (12-1...12-5) et une chambre de condensation (14-1...14-5);
- un ventilateur unique (128), installé à l'extérieur du matelas (110), est relié aux cellules de distillation, de manière à faire circuler un courant d'air en boucle fermée, soit successivement dans les différentes cellules soit séparément dans chacune de ces cellules;
- une turbine (120), aspirant l'air extérieur, est adaptée à maintenir une légère surpression à l'intérieur des différentes chambres de l'appareil;
- des cloisons mitoyennes obliques symétriques (16-1...16-9), fixées aux deux faces de l'appareil, séparent les chambres d'évaporation (12-1...12-5) des chambres de condensation (14-1...14-5) et donnent à ces deux types de chambres, des sections en forme de secteurs circulaires étroits de forme allongée;
- une unique couverture transparente d'isolation thermique (114) recouvre la partie de la face de l'appareil (110) exposée au soleil, formée par les zônes chaudes contiguës des chambres d'évaporation (12-1...12-5).

14. Alambic solaire de production d'eau douce selon l'une des revendication 5, 6 ou 7, **caractérisé en ce que**:
- l'appareil constitue une sorte de grand matelas pneumatique (110), formé par une pluralité de cellules de distillation;
- chaque cellule de distillation comporte, disposées en série, une chambre d'évaporation (12-1...12-5), une première chambre de condensation (14-1... 14-5) et une seconde chambre de condensation (30-1...30-5);
- un ventilateur unique (128), installé à l'extérieur du matelas (110), est relié aux cellules de distillation, de manière à faire circuler un courant d'air en boucle fermée, soit successivement dans les différentes cellules soit séparément dans chacune de ces cellules;
- une turbine (120), aspirant l'air extérieur, est adaptée à maintenir une légère surpression à l'intérieur des différentes chambres de l'appareil;
- des cloisons mitoyennes obliques symétriques (16-1...16-9), fixées aux deux faces de l'appareil, séparent les chambres d'évaporation (12-1...12-5) des premières chambres de condensation (14-1...14-5) et donnent à ces deux types de chambres, des sections en forme de secteurs circulaires étroits de forme allongée;
- une unique couverture transparente d'isolation thermique (114) recouvre la partie de la face de l'appareil (110) exposée au soleil, formée par les zônes chaudes contiguës des chambres d'évaporation (12-1...12-5).

## Claims

1. A solar still for producing fresh water comprising:
- an evaporation chamber (12-162), having a flexible, slightly stretched wall, constituted by a dark-coloured impermeable membrane (36a, 164), exposed to the sun, provided with a hydrophilic covering (38a, 166), arranged in the shade;
- a condensation chamber (14, 30, 152) having an impermeable wall (36c, 154), in contact with the outside medium adapted to dissipate, into this medium, the latent heat of condensation of the vapor produced;
- **characterised in that**:
- the evaporation chamber (12, 162) has an elongated shape and, by means of its ends (22, 26), communicates with the said condensation chamber (14, 30, 152);
- a blower (28) is installed in the apparatus, for causing a closed-loop circulation of air flow between said two chambers (12-14/30 or 162-152);
- a conduit (40, 158), supplied with water to be distilled, is adapted to distribute this water, by capillarity and gravity, on the hydrophilic covering (38a, 166);
- a conduit (54, 176), adapted to evacuate the fresh water produced, is installed at a low point (64) of said condensation chamber (14/30, 152);
- a conduit (56, 172), adapted to evacuate the brine produced, is installed at a low point (56) of said evaporation chamber (12, 162).

2. The solar still for producing fresh water according to claim 1, **characterised in that**:
- the evaporation chamber (162) is installed under a closed transparent space (152) and is inflated by the action of the blower (28);
- the condensation chamber is constituted by the volume of said closed space (152) external of the evaporation chamber (162), the vapor condensing on the internal face of said closed space.

3. The solar still for producing fresh water according to claim 1, comprising an evaporation chamber (12) provided with a transparent thermally-insulating cover (46b);
- **characterised in that**:
- the evaporation chamber (12) and condensation chamber (30) have both flexible impermeable walls and communicate with each other through openings (22, 26), formed in the upper portions of the end dividing walls (18, 20) of said evaporation chamber (12);
- the condensation chamber (30) is in the shade, and its wall in contact with the outside medium is provided with an outer hydrophilic covering (38 d), maintained moist by any suitable means, at least in part exposed to the air of the outside medium;
- suitable means (10 e-54, 120) are associated with said blower (28) to allow said two chambers (12, 30) to be inflated and to maintain them at a slight excess pressure.

4. The solar still for producing fresh water according to claim 1, including an evaporation chamber (12) provided with a transparent thermally-insulating cover (46b);
- **characterised in that**:
- the evaporation chamber (12) and condensation chamber (14) both have flexible impermeable walls and communicate with each other through openings (22, 26), formed in the upper portions of end dividing walls (18, 20) of said evaporation chamber (12);
- the condensation chamber (14) is in the shade and its wall (36c), in contact with the external medium, is provided with an outer hydrophilic coverings (38c), which is kept moist by any suitable means, at least in part exposed to the air of the extemal medium;
- the condensation chamber (14) is additionally separated from the evaporation chamber (12) by a longitudinal common dividing wall (16) adapted to recycle, in said evaporation chamber (12) a part of the latent heat of condensation of the vapor;
- suitable means (10e, 54, 120) are associated with said blower (28) to allow said two chambers (12, 14) to be inflated and to maintain therein a slight excess pressure.

5. The solar still for producing fresh water according to claim 1, including an evaporation chamber (12) provided with a transparent thermally-insulating cover (46b);
- **characterised in that**:
- a first condensation chamber (14) is separated from the evaporation chamber (12) by a longitudinal common dividing wall (16), adapted to ensure recycling of latent heat of condensation in said evaporation chamber (12);
- a second condensation chamber (30), arranged in the shade following said first condensation chamber (14), forming a preliminary chamber for said evaporation chamber (12), is provided with an outer hydrophilic coverings (38d), which is kept moist by any suitable means and, at least for the major part, is exposed to the air of the outside medium;
- the evaporation chamber (12) as well as the first condensation chamber (14) and second condensation chamber (30) all have flexible impermeable walls;
- openings (22, 26), formed in the upper portions of the end dividing walls of the evaporation chamber (12) provide communication between the downstream end of said evaporation chamber (12) and the upstream end of said first condensation chamber (14) and the upstream end of this chamber (12) with the downstream end of the second condensation chamber (30);
- the blower (28) sets up a closed-loop circulation of air in said three chambers (12, 14, 30) and suitable means (10e, 54, 120) are associated therewith to enable inflation of said three chambers (12, 14, 30) and for maintaining therein a slight excess pressure.

6. The solar still according to claim 5, **characterised in that** the first condensation chamber (14) is thermally well insulated (46a) from the outside medium.

7. The solar still according to claim 5, **characterised in that** the first condensation chamber (14) has a wall (36c) in contact with the external medium, this wall (36c) being provided with an insulating covering (46a) and/or a hydrophilic covering (38c), which is kept moist by any suitable means.

8. The solar still according to one of claims 3, 4, 5, **characterised in that** the means for setting up such an excess pressure comprise, preferably, a turbine (120) drawing in air from outside.

9. The solar still according to one of claims 4 and 5, **characterised in that** the longitudinal common dividing wall (16), separating the evaporation chamber (12) and condensation chambers (14), has an impermeable membrane (36b) at the condensation chamber side (14) and a hydrophilic covering (38b) at the side of the evaporation chamber (12), this covering (38b) being supplied with the water to be distilled by any suitable means.

10. The solar still according to claim 9, **characterised in that** the geometric shape of the cross section of said common dividing wall (16) is adapted to maximise heat exchange between the condensation chamber (14) and the evaporation chamber (12).

11. The solar still according to claim 5, **characterised in that** a flexible conduit (14c, d), installed between the downstream end of the first condensation chamber (14) and the upstream end of the second condensation chamber (30), is adapted to maximise heat exchange between the flow of hot moist air leaving said conduit (14 c, d) and the internal face of the outer wall of the second condensation chamber (30).

12. The solar still according to one of claims 3, 4, 5, **characterised in that** it has the shape of an elongated cylinder having a circular cross section, inflated with air under slight excess pressure, surrounding the various chambers (12, 14, 30) of the apparatus (10).

13. The solar still for producing fresh water according to claim 4, **characterised in that**:
- the apparatus constitutes a type of large pneumatic mattress (110), formed by a plurality of distillation cells;
- each distillation cell comprises, arranged in series, an evaporation chamber (12-1... 12-5) and a condensation chamber (14-1... 14-5);
- a blower (128), installed externally of said mattress (110) is linked to the distillation cells so as to establish closed loop circulation of air either successively in the various cells or separately within each one of said cells;
- a turbine (120) drawing in air from the outside, is adapted to maintain a slight excess pressure inside the various chambers of the apparatus;
- symmetrical oblique common dividing walls (16-1... 16-9) fixed to the two faces of the apparatus, separating the evaporation chambers (12-1... 12-5) from the condensation chambers (14-1... 14-5) and providing these two types of chamber with a cross section having the shape of a narrow, elongated, circular sector;
- a single thermally-insulating transparent cover (114) covering the portion of the face of the apparatus (110) exposed to the sun, formed by contiguous hot zones of said evaporation chambers (12-1... 12-5).

14. The solar still for producing fresh water according to any one of claims 5, 6 or 7, **characterised in that**:
- the apparatus constitutes a type of large pneumatic mattress (110), formed by a plurality of distillation cells;
- each distillation cell comprises, arranged in series, an evaporation chamber (12-1... 12-5), a first condensation chamber (14-1... 14-5) and a second condensation chamber (30-1 ... 30-5);
- a single blower (128), installed externally of said mattress (110), is linked to said distillation cell, in order to set up a closed-loop circulation of air either successively in the various cells, or separately within each one of said cells;
- a turbine (120), drawing in air from outside, is adapted to maintain a slight excess pressure inside the various chambers of the apparatus;
- symmetrical oblique common dividing walls (16-1... 16-9), fixed to the two faces of the apparatus, separate the evaporation chambers (12-1... 12-5) from the first condensation chambers (14-1... 14-5) and provide these two types of chambers with cross sections in the shape of elongated narrow circular sectors;
- a single thermally-insulating transparent cover (114) covers the part of the face of said apparatus (110) exposed to the sun, formed by contiguous hot zones of the evaporation chambers (12-1... 12-5).

## Patentansprüche

1. Solar-Destillationsvorrichtung zur Herstellung von weichem Wasser, aufweisend:
- eine Verdampfungskammer (12-162), die eine biegsame, leicht geneigte Wand besitzt, die aus einer undurchlässigen, der Sonne ausgesetzten Membran (36a-164) in dunkler Farbe besteht, die mit einer hydrophilen, im Schatten angeordneten Schicht versehen ist;
- eine Kondensationskammer (14-30-152), die eine mit der Außenumgebung in Kontakt stehende undurchlässige Wand (36c-154) besitzt, die angepaßt ist, um die latente Kondensationswärme des erzeugten Dampfs in diese Umgebung zu dissipieren;
- **dadurch gekennzeichnet, daß**:
- die Verdampfungskammer (12-162) eine längliche Form hat und über ihre Enden (22-26) mit der Kondensationskammer (14-30-152) in Verbindung steht;
- ein Gebläse (28) in der Vorrichtung angebracht ist, um einen ringförmig geschlossenen Luftstrom zwischen diesen zwei Kammern (12-14/30 oder 162-152) zirkulieren zu lassen;
- ein Rohr (40-158), das mit zu destillierendem Wasser gespeist wird, angepaßt ist, um dieses Wasser durch Kapillarwirkung und Schwerkraft auf der hydrophilen Schicht (38a-166) zu verteilen;
- ein zum Abfließenlassen des erzeugten weichen Wassers angepaßtes Rohr (54-176) an einem tiefen Punkt (64) der Kondensationskammer (14/30-152) angebracht ist;
- ein zum Abfließenlassen der erzeugten Salzlake angepaßtes Rohr (56-172) an einem tiefen Punkt (56) der Verdampfungskammer (12-162) angebracht ist.

2. Solar-Destillationsvorrichtung zur Herstellung von weichem Wasser nach Anspruch 1, **dadurch gekennzeichnet, daß**:
- die Verdampfungskammer (162) unter einem durchsichtigen geschlossenen Gehäuse (152) aufgestellt ist und durch die Wirkung eines Gebläses (28) aufgeblasen wird;
- die Kondensationskammer aus dem Raum des Gehäuses (152) außerhalb der Verdampfungskammer (162) gebildet ist, wobei der Dampf an der Innenfläche dieses Gehäuses kondensiert.

3. Solar-Destillationsvorrichtung zur Herstellung von weichem Wasser nach Anspruch 1, aufweisend eine Verdampfungskammer (12), die mit einer durchsichtigen wärmeisolierenden Abdeckung (46b) versehen ist;
**dadurch gekennzeichnet, daß**:
- die Verdampfungs- (12) und die Kondensationskammer (30), alle beide, biegsame undurchlässige Wände haben und durch Öffnungen (22-26) miteinander in Verbindung stehen, die in die oberen Abschnitte der Scheidewände an den Enden (18-20) der Verdampfungskammer (12) gearbeitet sind;
- die Kondensationskammer (30) im Schatten ist und ihre mit der Außenumgebung in Kontakt stehende Wand mit einer äußeren hydrophilen Schicht (38d) versehen ist, die durch jedes geeignete Mittel zumindest an dem der Luft der Außenumgebung ausgesetzten Abschnitt feucht gehalten wird;
- geeignete Mittel (10e-54-120) an dem Gebläse (28) angeschlossen sind, um ein Aufblasen der zwei Kammern (12-30) zu erlauben und dort einen leichten Überdruck aufrechtzuerhalten.

4. Solar-Destillationsvorrichtung zur Herstellung von weichem Wasser nach Anspruch 1, aufweisend eine Verdampfungskammer (12), die mit einer durchsichtigen wärmeisolierenden Abdeckung (46b) versehen ist;
- **dadurch gekennzeichnet, daß**:
- die Verdampfungs- (12) und die Kondensationskammer (14), alle beide, biegsame undurchlässige Wände haben und durch Öffnungen (22-26) miteinander in Verbindung stehen, die in die oberen Abschnitte der Scheidewände an den Enden (18-20) der Verdampfungskammer (12) gearbeitet sind;
- die Kondensationskammer (14) im Schatten ist und ihre mit der Außenumgebung in Kontakt stehende Wand (36c) mit einer äußeren hydrophilen Schicht (38c) versehen ist, die durch jedes geeignete Mittel zumindest an dem der Luft der Außenumgebung ausgesetzten Abschnitt feucht gehalten wird;
- die Kondensationskammer (14) ferner von der Verdampfungskammer (12) durch eine in Längsrichtung in der Mitte verlaufende Scheidewand (16) getrennt ist, die angepaßt ist, um in der Verdampfungskammer (12) einen Teil der latenten Kondensationswärme des Dampfes zurückzugewinnen;
- geeignete Mittel (10e-54-120) an dem Gebläse (28) angeschlossen sind, um ein Aufblasen der zwei Kammern (12-14) zu erlauben und dort einen leichten Überdruck aufrechtzuerhalten.

5. Solar-Destillationsvorrichtung zur Herstellung von weichem Wasser nach Anspruch 1, aufweisend eine Verdampfungskammer (12), die mit einer durchsichtigen wärmeisolierenden Abdeckung (46b) versehen ist;
- **dadurch gekennzeichnet, daß**:
- eine erste Kondensationskammer (14) von der Verdampfungskammer (12) durch eine in Längsrichtung in der Mitte verlaufende Scheidewand (16) getrennt ist, die angepaßt ist, um eine Zurückgewinnung der latenten Kondensationswärme in der Verdampfungskammer (12) sicherzustellen;
- eine zweite Kondensationskammer (30), die im Schatten im Anschluß an die erste (14), im Vorraum der Verdampfungskammer (12), angeordnet ist, mit einer äußeren hydrophilen Schicht (38d) versehen ist, die durch jedes geeignete Mittel feucht gehalten wird und mindestens größtenteils der Luft der Außenumgebung ausgesetzt ist;
- die Verdampfungskammer (12) sowie die erste (14) und die zweite (30) Kondensationskammer, alle drei, biegsame undurchlässige Wände haben;
- in die oberen Abschnitte der Scheidewände an den Enden der Verdampfungskammer (12) gearbeitete Öffnungen (22-26) die stromabwärts gelegene Seite der Verdampfungskammer (12) mit der stromaufwärts gelegenen Seite der ersten Kondensationskammer (14) und die stromaufwärts gelegene Seite dieser Kammer (12) mit der stromabwärts gelegenen Seite der zweiten Kondensationskammer (30) verbinden;
- das Gebläse (28) einen ringförmig geschlossenen Luftstrom in den drei Kammern (12-14-30) zirkulieren läßt und geeignete Mittel (10e-54-120) an dieses angeschlossen sind, um ein Aufblasen der drei Kammern (12-14-30) zu erlauben und um dort einen leichten Überdruck aufrechtzuerhalten.

6. Solar-Destillationsvorrichtung nach Anspruch 5, **dadurch gekennzeichnet, daß** die erste Kondensationskammer (14) von der Außenumgebung sehr gut wärmeisoliert (46a) ist.

7. Solar-Destillationsvorrichtung nach Anspruch 5, **dadurch gekennzeichnet, daß** die erste Kondensationskammer (14) eine mit der Außenumgebung in Kontakt stehende Wand (36c) besitzt, wobei diese Wand (36c) mit einer isolierenden Schicht (46a) und/oder einer hydrophilen Schicht (38c) versehen ist, die durch jedes geeignete Mittel feucht gehalten wird.

8. Solar-Destillationsvorrichtung nach einem der Ansprüche 3, 4 5, **dadurch gekennzeichnet, daß** die Mittel zur Erzeugung eines solchen Überdrucks vorzugsweise eine Außenluft ansaugende Turbine (120) aufweisen.

9. Solar-Destillationsvorrichtung nach einem der Ansprüche. 4 und 5, **dadurch gekennzeichnet, daß** die in Längsrichtung in der Mitte verlaufende Scheidewand (16), die die Verdampfungskammer (12) und Kondensationskammer (14) trennt, an der Seite der Kondensationskammer (14) eine undurchlässige Membran (36b) und an der Seite der Verdampfungskammer (12) eine hydrophile Schicht (38b) aufweist, wobei diese Schicht (38b) durch jedes geeignete Mittel mit zu destillierendem Wasser versorgt wird.

10. Solar-Destillationsvorrichtung nach Anspruch 9, **dadurch gekennzeichnet, daß** die geometrische Form des Querschnitts senkrecht zur in der Mitte verlaufenden Scheidewand (16) angepaßt ist, um den Wärmeaustausch zwischen der Kondensationskammer (14) und der Verdampfungskammer (12) zu maximieren.

11. Solar-Destillationsvorrichtung nach Anspruch 5, **dadurch gekennzeichnet, daß** ein biegsames Rohr (14c,d), das zwischen dem stromabwärts gelegenen Ende der ersten Kondensationskammer (14) und dem stromaufwärts gelegenen Ende der zweiten Kondensationskammer (30) angebracht ist, angepaßt ist, um den Wärmeaustausch zwischen dem feuchten warmen Luftstrom, der aus diesem Rohr (14c,d) austritt, und der Innenfläche der Außenwand der zweiten Kondensationskammer (30) zu maximieren.

12. Solar-Destillationsvorrichtung nach einem der Ansprüche 3, 4, 5, **dadurch gekennzeichnet, daß** sie in Form eines langen, mit Luft auf leichten Überdruck aufgeblasenen, die verschiedenen Kammern (12-14-30) der Vorrichtung (10) umhüllenden Zylinders mit kreisförmigem Durchmesser vorliegt.

13. Solar-Destillationsvorrichtung zur Herstellung von weichem Wasser nach Anspruch 4, **dadurch gekennzeichnet, daß**:
- die Vorrichtung eine Art große Luftmatratze (110) bildet, die aus mehreren Destillationszellen gebildet ist;
- jede Destillationszelle, in Reihe angeordnet, eine Verdampfungskammer (12-1...12-5) und eine Kondensationskammer (14-1...14-5) aufweist;
- ein einziges außerhalb der Matratze (110) angebrachtes Gebläse (128) so mit den Destillationszellen verbunden ist, um einen ringförmig geschlossenen Luftstrom entweder nacheinander in den verschiedenen Zellen oder getrennt in jeder dieser Zellen zirkulieren zu lassen;
- eine Außenluft ansaugende Turbine (12) angepaßt ist, um im Innern der verschiedenen Kammern der Vorrichtung einen leichten Überdruck aufrechtzuerhalten;
- in der Mitte verlaufende schräge symmetrische Scheidewände (16-1...16-9), die an zwei Flächen der Vorrichtung befestigt sind, die Verdampfungskammern (12-1...12-5) von den Kondensationskammern (14-1...14-5) trennen und diesen zwei Kammertypen Querschnitte in Form von schmalen länglichen Kreissektoren verleihen;
- eine einzige durchsichtige wärmeisolierende Abdeckung (114) den Teil der Fläche der Vorrichtung (110) bedeckt, der der Sonne ausgesetzt ist, aus den warmen benachbarten Zonen der Verdampfungkammern (12-1...12-5) gebildet ist.

14. Solar-Destillationsvorrichtung zur Herstellung von weichem Wasser nach einem der Ansprüche 5, 6 oder 7, **dadurch gekennzeichnet, daß**:
- die Vorrichtung eine Art große Luftmatratze (110) bildet, die aus mehreren Destillationszellen gebildet ist;
jede dieser Destillationszellen, in Reihe angeordnet, eine Verdampfungskammer (12-1...12-5), eine erste Kondensationskammer (14-1...14-5) und eine zweite Kondensationskammer (30-1...30-5) aufweist;
ein einziges außerhalb der Matratze (110) angebrachtes Gebläse (128) so mit den Destillationszellen verbunden ist, um einen ringförmig geschlossenen Luftstrom entweder nacheinander in den verschiedenen Zellen oder getrennt in jeder dieser Zellen zirkulieren zu lassen;
- eine Außenluft ansaugende Turbine (120) angepaßt ist, um einen leichten Überdruck im Innern der verschiedenen Kammern der Vorrichtung aufrechtzuerhalten;
- in der Mitte verlaufende schräge symmetrische Scheidewände (16-1...16-9), die an zwei Flächen der Vorrichtung befestigt sind, die Verdampfungskammern (12-1...12-5) von den ersten Kondensationskammern (14-1...14-5) trennen und diesen zwei Kammertypen Querschnitte in Form von länglichen schmalen Kreissektoren verleihen;
- eine einzige durchsichtige wärmeisolierende Abdeckung (114) den Teil der Fläche der Vorrichtung (110) bedeckt, der der Sonne ausgesetzt ist, aus warmen benachbarten Zonen der Verdampfungskammern (12-1...12-5) gebildet ist.
